(19) Europäisches Patentamt
European Patent Office
Office européen des brevets

(11) Publication number: 0 004 646 B2

(12) # NEW EUROPEAN PATENT SPECIFICATION

(45) Date of publication of the new patent specification: 30.10.91 Bulletin 91/44

(51) Int. Cl.[5]: C08F 4/64, C08F 2/34, // C08F110/02

(21) Application number: 79100957.4

(22) Date of filing: 30.03.79

(54) **Process for preparing polymerization catalyst and process for ethylene homopolymerization.**

(30) Priority: 31.03.78 US 892037
27.02.79 US 14412

(43) Date of publication of application:
17.10.79 Bulletin 79/21

(45) Publication of the grant of the patent:
15.05.85 Bulletin 85/20

(45) Mention of the opposition decision:
30.10.91 Bulletin 91/44

(84) Designated Contracting States:
BE CH DE FR GB IT NL SE

(56) References cited:
DE-A- 1 808 388
DE-A- 2 543 272
FR-A- 2 200 289
GB-A- 1 258 984
GB-A- 1 502 567
US-A- 3 644 318
US-A- 3 953 414
US-A- 3 989 881
US-A- 4 003 712
US-A- 4 048 412
ZA-A- 767 073

(73) Proprietor: UNION CARBIDE CORPORATION
39 Old Ridgebury Road
Danbury Connecticut 06817 (US)

(72) Inventor: Wagner, Burkhard Eric
40 Lawrence Avenue
Highland Park, NJ (US)
Inventor: Karol, Frederick John
Hiland Drive
Belle Mead New Jersey (US)
Inventor: Goeke, George Leonard
Hiland Drive
Belle Mead New Jersey (US)
Inventor: Jorgensen, Robert James
45 Westmoreland Drive
Dunbar West Virginia (US)
Inventor: Friis, Nils
25 Aronimink Place
Macungie Pennsylvania (US)

(74) Representative: Weinhold, Peter, Dr. et al
Patentanwälte Dr. V. Schmied-Kowarzik
Dipl.-Ing. G. Dannenberg Dr. P. Weinhold Dr. D.
Gudel Dipl.-Ing. S. Schubert Dr. P. Barz
Siegfriedstrasse 8
W-8000 München 40 (DE)

EP 0 004 646 B2

## Description

The invention relates to a process for homopolymerizing ethylene employing high activity Mg and Ti containing complex catalysts in a low pressure gas phase fluid bed process to produce ethylene homopolymers having a density of ≧0.958 to ≦0.972 g/cm³ and a melt flow ratio of ≧22 to ≦32, and a process for producing a catalyst composition useful in the said homopolymerization.

Ethylene homopolymers having a density of ≧0.96 g/cm³ and a melt index in the range of 5 to 50 are useful for injection molding purposes requiring excellent impact strength properties, provided that they have a relatively narrow molecular weight distribution. Ethylene polymers having a density of ≧0.96 g/cm³ and a melt index of ≦20 can be made with the catalysts and low pressure gas phase processes described in US-A-3,023,203, 4,003,712 and 3,709,853. The polymers made with the supported chromium oxide, silylchromate and chromocene catalysts, respectively, of these patents, however, have a relatively broad molecular weight distribution, as evidenced by melt flow ratio values of ≧35. The polymers of these patents, therefore, have relatively limited use for injection molding applications requiring excellent impact strength properties. It is desirably, therefore, to provide catalysts which would enable one to readily prepare, in a gas phase fluid bed process, ethylene homopolymers which would have a relatively narrow molecular weight distribution.

To be commercially useful in a gas phase process, such as the fluid bed process of US-A-3,709,853, 4,003,712 and 4,011,382, and CA-A-991,798 and BE-A-839,380, the catalyst employed must be a high activity catalyst, that is, it must have a level of productivity of ≧50,000, preferably ≧100,000 kg of polymer per kg of primary metal in the catalyst. This is so because such gas phase fluid bed processes usually do not employ any catalyst residue removing procedures. Thus, the catalyst residue in the polymer must be so small that it can be left in the polymer without causing any undue problems in the hands of the resin fabricator and/or ultimate consumer. Where a high activity catalyst is successfully used in such fluid bed processes the primary metal content of the resin is of the order of ≦20 parts per million (ppm) at a productivity level of ≧50,000 kg of polymer per kg of primary metal, and of the order of ≦10 ppm at a productivity level of ≧100,000 kg of polymer per kg of primary metal, and of the order of ≦3 ppm at a productivity level of ≧300,000 kg of polymer per kg of primary metal. Low catalyst residue contents are also important where the catalyst is made with chlorine containing materials such as the titanium, magnesium and/or aluminum chlorides used in some so-called Ziegler or Ziegler-Natta catalysts. High residual chlorine values in a molding resin will cause pitting and corrosion on the metal surfaces of the molding devices. Cl residues of the order of ≧200 ppm are not commercially useful.

US-A-3,989,881 discloses the use of a high activity catalyst for the manufacture, under slurry polymerization conditions, of ethylene polymers having a relatively narrow molecular weight distribution (Mw/Mn) of about 2.7 to 3.1. Attempts were made to use catalysts similar to those described in US-A-3,989,881 for the purpose of making polyethylene of narrow molecular weight distribution by polymerizing ethylene alone, or with propylene, in the gas phase in a fluid bed process using apparatus and conditions similar to those employed in US-A-4,011,382 and BE-A-839,380. These attempts were not successful. In order to avoid the use of the solvents in the slurried catalyst systems of US-A-3,989,881, the Ti/Mg containing components were dried. However, the dried material, a viscous, gummy, pyrophoric composition, could not be readily fed to the reactor because it was not in a free flowing form. Even when blended with silica to improve its free-flowing properties, and then added to the reactor, the results were commercially unacceptable. The productivity of the catalyst was poor, or the catalyst was pyrophoric and difficult to handle, or the polymer product was produced in the form of needle shaped products which were difficult to fluidize and which exhibited very poor flow properties.

US-A-4,124,532 discloses the polymerization of ethylene and propylene with high activity catalysts. These catalysts comprise complexes which may contain magnesium and titanium. These complexes are prepared by reacting the halide $MX_2$ (where M may be Mg) with a compound M'Y (where M' may be Ti and Y is halogen or an organic radical) in an electron donor compound. These complexes are then isolated by either crystallization, by evaporation of the solvent or by precipitation.

Polymerization is carried out with these catalytic complexes and an alkyl aluminum compound.

However, US-A-4 124 532 does not disclose any special techniques or methods of preparing the catalyst in order to achieve the desirable results described in the present invention. The use of the catalyts described in US-A-4 124 532, without these special methods, would not lead to a commercial fluid bed process to produce polyethylenes at commercial rates. Thus, even when diluted with a carrier and employed in a fluid bed process, it has been found that polymerization cannot be sustained on a continuous basis with such catalysts. The reason for this is that the catalysts are needle-like in shape and when activated in a fluid bed produce polymers which also have a needle-like shape. The production of such needle-shaped polymers soon causes a termination of fluidization in the bed and a cessation of polymerization.

US-A-3 922 322 and 4 035 560 disclose the use of several Ti and Mg containing catalysts for the manufacture of granular ethylene polymers in a gas phase fluid bed process under a pressure of <69 bar (<1000

psi). The use of these catalysts in these processes, however, has significant disadvantages. The catalysts of US-A-3 922 322 provide polymers having a very high catalyst residue content, i.e., about 100 ppm of Ti and greater than about 300 ppm Cl, according to the working example of this patent. Further, as disclosed in the working example of US-A-3,922,322, the catalyst is used in the form of a prepolymer, and very high volumes of the catalyst composition must be fed to the reactor relative to the volume of polymer made in the reactor. The preparation and use of this catalyst thus requires the use of relatively large sized equipment for the manufacture, storage and transporting of the catalyst.

The catalyst of US-A-4,035,560 also apparently provide polymers having high catalyst residues, and the catalyst compositions are apparently pyrophoric because of the types and amounts of reducing agents employed in such catalysts.

It has now been unexpectedly found that ethylene homopolymers having a density range of 0.958 to 0.972 g/cm³, and a melt flow ratio of ≧22 to ≦32, and which have a relatively low residual catalyst content can be produced at relatively high productivities for commercial purposes by a low pressure gas phase fluid bed process if the ethylene is homopolymerized in the presence of a high activity magnesium-titanium complex catalyst prepared as described below, under specific activation conditions with an organo aluminum compound and an inert carrier material.

An object of the present invention is to provide a process for producing, at relatively high productivities and in a low pressure gas phase fluid bed process, ethylene homopolymers which have a density of 0.958 to 0.972 g/cm³, a melt flow ratio of ≧22 to ≦32 and a relatively low residual catalyst content.

A further object of the present invention is to provide a process in which ethylene homopolymers, which are useful for a variety of end-use applications, may be readily prepared.

A still further object of the present invention is to provide a process of preparing a catalyst composition which is useful in the new process for homopolymerizing ethylene.

The process for preparing the catalyst composition according to the invention comprises forming a precursor composition from a magnesium compound, titanium compound and electron donor compound, and then activating the precursor composition with an organoaluminum compound to form the catalyst, and is characterized by

(A) forming a precursor composition of the formula

$$Mg_mTi(OR)_nX_pED_q$$

wherein R is a $C_1$ to $C_{14}$ aliphatic or aromatic hydrocarbon radical, or COR′ wherein R′ is a $C_1$ to $C_{14}$ aliphatic or aromatic hydrocarbon radiacal,

X is selected from the group consisting of Cl, Br, I or mixtures thereof,

ED is an electron donor compound,

m is ≧1.5 to ≦56

n is 0 or 1

p is ≧6 to ≦116 and

q is ≧2 to ≦85

by dissolving at least one magnesium compound and at least one titanium compound in at least one electron donor compound so as to thereby form a solution of said precursor composition in said electron donor compound, and recovering said precursor composition from said solution,

said magnesium compound having the structure $MgX_2$,

said titanium compound having the structure $Ti(OR)_aX_b$ wherein a is 0 or 1, b is 2 to 4 inclusive and a+b=3 or 4,

said electron donor compound being a liquid organic compound in which said magnesium compound and said titanium compound are soluble and which is selected from the group consisting of alkyl esters of aliphatic and aromatic carboxylic acids, aliphatic ethers, cyclic ethers and aliphatic ketones, and

said magnesium compound, said titanium compound and said electron donor compound being employed in such amounts as to satisfy the values of m, n, p and q,

(B) mechanically mixing or blending the recovered precursor composition with at least one solid dry inert particulate carrier material in a ratio of 0.033 to 1 part of precursor composition per part by weight of carrier material, said carrier material having an average particle size of from 10 to 250 μm,

(C) treating the precursor composition outside the polymerization reactor in a hydrocarbon slurry with enough activator compound so as to provide a partially activated precursor composition with an activator compound: Ti molar ratio of >0 to 10:1, said activator compound having the structure

$$Al(R'')_cX'_dH_e$$

wherein X′ is Cl or OR‴, R″ and R‴ are the same of different and are $C_1$ to $C_{14}$ saturated hydrocarbon radicals, d is 0 to 1.5, e is 1 or 0 and c+d+e=3, and drying the mixture to obtain a free-following solid particulate material, and

(D) feeding the precursor composition into the polymerization reactor wherein it is further activated by adding additional activator compound to the reactor in such amounts as to provide a total Al:Ti molar ratio of 10 to 400:1 in said precursor composition.

The process for producing ethylene homopolymer according to the invention comprises homopolymerizing ethylene at a temperature of 30 to 115°C by continuously contacting the monomer charge with, in the prefence of 0 to 2.0 mols of hydrogen per mol of ethylene in a gas phase fluid bed reaction zone, particles of the catalyst prepared as described above.

Ethylene homopolymer obtainable by the above-mentioned process, as recovered directly from a polymerization reactor, is in granular form with a residual Ti content of >0 to ≦20 ppm and a content of one or more of Cl, Br or I of >0 to ≦140 ppm at a productivity level of ≧50000 kg of polymer per kg of titanium and has a melt index of ≧0 to 50 g/10 min, a melt flow ratio of ≧22 to ≦32, an unsaturated group content of ≦1 C=C/1000 carbon atoms, a density of ≧0.958 to ≦0.972 g/cm³, and a bulk density of 0.29 to 0.51 g/cm³ (18 to 32 lbs/ft³).

The homopolymers have a melt flow ratio of ≧22 to ≦32, and preferably of ≧25 to ≦30. The melt flow ratio value is another means of indicating the molecular weight distribution of a polymer. The melt flow ratio (MFR) range of ≧22 to ≦32 thus corresponds to a Mw/Mn value range of 2.7 to 4.1 and the MFR range of ≧25 to ≦30 corresponds to a Mw/Mn range of 2.8 to 3.6.

The homopolymers have a density of ≧0.958 to ≦0.972 g/cm³, and preferably of ≧0.961 to ≦0.968 g/cm³.

The melt index of a homopolymer is a reflection of its molecular weight. Polymers having a relatively high molecular weight have a relatively low melt index. Ultra-high molecular weight ethylene polymers have high load (HLMI) melt index of about 0.0 g/10 min, and a very high molecular weight polymers have a high load melt index (HLMI) of about 0.0 to 1.0 g/10 min. Such high molecular weight polymers are difficult, if not impossible, to mold in conventional injection molding equipment. The polymers made in the process of the present invention, on the other hand, can be readily molded, in such equipment. They have a standard or normal load melt index of ≧0.0 to 50 g/10 min, and preferably of 0.5 to 35 g/10 min and a high load melt index (HLMI) of 11 to 950 g/10 min. The melt index of the homopolymers which are made in the process of the present invention is a function of a combination of the polymerization temperature of the reaction and the hydrogen/monomer ratio in the reaction system. Thus, the melt index is raised by increasing the polymerization temperature and/or by increasing the hydrogen/monomer ratio.

The homopolymers have an unsaturated group content of ≦1, and usually ≧0.1 to ≦0.3, C=C/1000 carbon atoms, and a cyclohexane extractable content of less than about 3, and preferably less than about 2, weight percent.

The homopolymers have a residual catalyst content, in terms of parts per million of titanium metal, of the order of >0 to ≦20 parts per million (ppm) at a productivity level of ≧50,000 kg of polymer per kg titanium, and of the order of >0 to ≦10 ppm at a productivity level of ≧100,000 kg of polymer per kg of titanium, and of the order of >0 to ≦3 parts per million at a productivity level of ≧300,000 kg of polymer per kg of titanium. In terms of Cl, Br or I residues, the polymers have a Cl, Br or I residue content which depends upon the Cl, Br or I content of the precursor. From the Ti to Cl, Br or I ratio in the initial precursor, it is possible to calculate Cl, Br, or I residues from knowledge of the productivity level based on titanium residue only. For many of the homopolymers made only with Cl containing components of the catalyst system (Cl/Ti=7), one can calculate a Cl residue content of >0 to ≦140 ppm at a productivity of ≧50,000 kg of polymer per kg of titanium, a Cl content of >0 to ≦70 ppm at a productivity of ≧100,000 kg of polymer per kg of titanium, and a Cl content of >0 to ≦21 ppm at a productivity of ≧300,000 kg of polymer per kg of titanium. The homopolymers are readily produced in the process of the present invention at productivities of up to about 300,000 kg of polymer per kg of titanium.

The homopolymers are granular materials which have an average particle size of the order of 0.125 to 1.78 mm (0.005 to 0.06 inches), and preferably of 0.5 to 1.0 mm (0.02 to 0.04 inches), in diameter. The particle size is important for the purposes of readily fluidizing the polymer particles in the fluid bed reactor, as described below. The homopolymers have bulk densities of 0.29 to 0.51 g/cm³, preferably 0.40 to 0.51 g/cm³ (18 to 32, preferably 25 to 32 pounds per cubic foot).

The compounds used to form the high activity catalyst used in the present invention comprise at least one titanium compound, at least one magnesium compound, at least one electron donor compound, at least one activator compound and at least one inert carrier material, as defined below.

The titanium compound has the structure

$$Ti(OR)_aX_b$$

wherein R is a $C_1$ to $C_{14}$ aliphatic or aromatic hydrocarbon radical, or COR′ where R′ is a $C_1$ to $C_{14}$ aliphatic or aromatic hydrocarbon radical,

X is selected from the group consisting of Cl, Br, I, or mixtures thereof, a is 0 or 1, b is 2 to 4 inclusive and a+b=3 or 4.

Preferably R and R' are $C_{1-14}$ alkyl and $C_{6-14}$ aryl, especially $C_{1-8}$ alkyl, most preferably $C_{1-6}$ alkyl, and $C_{6-10}$ aryl, e.g. methyl, ethyl, propyl, i-propyl, butyl, i-butyl, pentyl, hexyl, octyl, i-octyl, nonyl, decyl, dodecyl, tetradecyl, phenyl, tolyl, xylyl, ethylphenyl and naphthyl.

The titanium compounds can be used individually or in combinations thereof, and would include $TiCl_3$, $TiCl_4$, $Ti(OC_6H_5)Cl_3$, $Ti(OCOCH_3)Cl_3$ and $Ti(OCOC_6H_5)Cl_3$.

The magnesium compound has the structure

$$MgX_2$$

wherein X is selected from the group consisting of Cl, Br, I, or mixtures thereof. Such magnesium compounds can be used individually or in combination thereof and would include $MgCl_2$, $MgBr_2$ and $MgI_2$. Anhydrous $MgCl_2$ is the particularly preferred magnesium compound.

From 1.5 to ≦56, and preferably from 1.5 to 10, mols of the magnesium compound are used per mol of the titanium compound in preparing the catalysts employed in the present invention.

The titanium compound and the magnesium compound should be used in a form which will facilitate their dissolution in the electron donor compound, as described herein below.

The electron donor compound is an organic compound which is liquid at 25°C and in which the titanium compound and the magnesium compound are soluble. The electron donor compounds are known, as such, or as Lewis bases.

The electron donor compounds would include such compounds as alkyl esters of aliphatic and aromatic carboxylic acids, aliphatic ethers, cyclic ethers and aliphatic ketones. Among these electron donor compounds the preferable ones are alkyl esters of $C_1$ to $C_4$ saturated aliphatic carboxylic acids; alkyl esters of $C_7$ to $C_8$ aromatic carboxylic acids; $C_2$ to $C_8$, and most preferably $C_3$ to $C_4$, aliphatic ethers; $C_3$ to $C_4$ cyclic ethers, and most preferably $C_4$ cyclic mono- or di-ethers; $C_3$ to $C_6$, and most preferably $C_4$ cyclic mono- or di-ethers; $C_3$ to $C_6$, and most preferably $C_3$ to $C_4$, aliphatic ketones. The most preferred of these electron donor compounds would include methyl formate, ethyl acetate, butyl acetate, ethyl ether, hexyl ether, tetrahydrofuran, dioxane, acetone and methyl isobutyl ketone.

The electron donor compounds can be used individually or in combinations thereof.

From 2 to 85, and preferably from 3 to 10 mols of the electron donor compound are used per mol of Ti.

The activator compound has the structure

$$Al(R'')_cX'_dH_e$$

wherein X' is Cl or OR''', R'' and R''' are the same or different and are $C_1$ to $C_{14}$ saturated hydrocarbon radicals, d is 0 to 1.5, e is 1 or 0 and c+d+e=3.

Preferably R'' and R''' are saturated aliphatic $C_{1-14}$, residues (such as those mentioned above in context with residues R and R') or saturated cycloaliphatic residues with 5-10 carbon atoms such as cyclopentyl, cyclohexyl, cycloheptyl, methylcyclohexyl.

Such activator compounds can be used individually or in combination thereof and would include $Al(C_2H_5)_3$, $Al(C_2H_5)_2Cl$, $Al(i\text{-}C_4H_9)_3$, $Al_2(C_2H_5)_3Cl_3$, $Al(i\text{-}C_4H_9)_2H$, $Al(C_6H_{13})_3$, $Al(C_8H_{17})_3$, $Al(C_2H_5)_2H$ and $Al(C_2H_5)_2(OC_2H_5)$.

From 10 to 400, and preferably from ≧100 to 100, mols of the activator compound are used per mol of the titanium compound in activating the precursor composition employed in the present invention.

The carrier materials used in the process of the present invention are solid, particulate materials which are inert to the other components of the catalyst composition, and to the other active components of the reaction system. These carrier materials would include inorganic materials such as oxides of silicon and aluminum and molecular sieves, and organic materials such as olefin polymers such as polyethylene. The carrier materials are used in the form of dry powders having an average particle size of 10 to 250, and preferably of 50 to 150, µm. These materials are also preferably porous and have a surface area of ≧3, and preferably of ≧50, square meters per gram. The carrier material should be dry, that is free of absorbed water. Drying of the silica carrier material is carried out by heating it at a temperature of ≧600°C. Alternatively, the silica carrier material dried at a temperature of ≧200°C may be treated with 1 to 8 weight percent of one or more of the aluminum alkyl compounds described above. This modification of the silica carrier material by the aluminum alkyl compound provides the catalyst composition with increased activity and also improves polymer particle morphology of the resulting ethylene polymers.

The catalyst used in the present invention is prepared by first preparing a precursor composition from the titanium compound, the magnesium compound, and the electron donor compound, as described below, and by then treating the precursor composition with the carrier material and the activator compound as described below.

The precursor composition is formed by dissolving the titanium compound and the magnesium compound in the electron donor compound at a temperature of 20°C up to the boiling point of the electron donor compound. The titanium compound can be added to the electron donor compound before or after the addition of the magnesium compound, or concurrent therewith. The dissolution of the titanium compound and the magnesium compound can be facilitated by stirring, and, in some instances by refluxing, these two compounds in the electron donor compound. When the titanium compound and the magnesium compound are dissolved, the precursor composition is isolated by crystallization or by precipitation with a $C_5$ to $C_8$ aliphatic or aromatic hydrocarbon such as hexane, isopentane or benzene.

The crystallized or precipitated precursor composition is isolated in the form of fine, free flowing particles having an average particle size of 10 to 100 μm and a bulk density of 0.3 to 0.5 gl/cm³ (18 to 33 pounds per cubic foot). Particle sizes of ≦100 μm are preferred for use in a fluid bed process. The particle size of the isolated precursor composition can be controlled by the rate of crystallization or precipitation.

When thus made, as disclosed above, the precursor composition has the formula

$$Mg_mTi(OR)_nX_p[ED]_q$$

wherein

ED is the electron donor compound,

m is ≧1.5 to ≦56, and preferably ≧1.5 to ≦5,

n is 0 or 1,

p is ≧6 to ≦116, and preferably ≧6 to ≦14,

q is ≧2 to ≦85, and preferably ≧4 to ≦11,

R is a $C_1$ to $C_{14}$ aliphatic or aromatic hydrocarbon radical, or COR′ wherein R′ is a $C_1$ to $C_{14}$ aliphatic or aromatic hydrocarbon radical and,

X is selected from the group consisting of Cl, Br, I, or mixtures thereof.

The polymerization activity of the completely activated catalyst is so high, in the process of the present invention, that a dilution of the precursor composition with the carrier material is necessary in order to effectively control the reaction rate. The dilution of the precursor composition can be accomplished before the precursor composition is partially activated, as disclosed below, or concurrent with such activation. The dilution of the precursor composition with the carrier material is accomplished by mechanically mixing or blending 0.033 to 1, and preferably 0.1 to 0.33, parts of the precursor composition with one part by weight of the carrier material.

In order to be used in the process of the present invention, the precursor composition must be treated with sufficient activator compound to transform the Ti atoms in the precursor composition to an active state. It has been found, however, that the manner of activating the catalyst is very critical in order to obtain an active material even when an inert carrier is present. Attempts to activate the catalyst by a process similar to that of US-A-3,989,881, for example, wherein the total amount of activator theoretically needed to fully activate the catalyst was added to the precursor composition in a hydrocarbon slurry, followed by drying of the slurry at temperatures of ≧20 to ≦80°C to remove the solvent therefrom to facilitate the use of the catalyst in a gas phase fluid bed process, produced a product which was not sufficiently active in the process otherwise described below for commercial purposes.

It has been found that, in order to prepare a useful catalyst it is necessary to conduct the activation in such a way that the final activation is conducted in such manner as to avoid the need for drying the fully active catalyst to remove solvent therefrom.

According to the present invention, the precursor composition is first partially activated outside the polymerization reactor by treating it in a hydrocarbon solvent slurry with >0 to <10, preferably 3 to 6, mols of activator compound per mol of titanium compound in said precursor composition. The hydrocarbon slurry is then removed by drying and the partially activated precursor composition is fed to the polymerization reactor where activation is completed by treatment with additional activator compound which can be the same or a different compound.

In the first stage of the activation the solid particulate precursor composition, diluted with carrier material, is reacted with and partially activated by enough activator compound so as to provide a partially activated precursor composition which has an activator compound/Ti molar ratio of >0 to <10:1, and preferably of 3 to 6:1. This partial activation reaction is carried out in a hydrocarbon solvent slurry followed by drying of the resulting mixture, to remove the solvent, at temperatures between 20 to 80, and preferably of 50 to 70, °C. In this partial activation procedure the activator compound may be used while absorbed on the carrier material used to dilute the activator compound. The resulting product is a free-flowing solid particulate material which can be readily fed to the polymerization reactor. The partially activated precursor composition, however, is, at best, weakly active, as a polymerization catalyst in the process of the present invention. In order to render the partially activated precursor composition active for ethylene polymerization purposes, additional activator compound must also be added to the polymerization reactor to complete, in the reactor, the activation of the precursor composition. The additional activator compound and the partially activated precursor composition are preferably fed to the reactor through separate feed lines. The additional activator compound may be sprayed into the reactor in the form of a solution thereof in a hydrocarbon solvent such as isopentane, hexane, or mineral oil. This solution usually contains 2 to 30 weight percent of the activator compound. The activator compound may also be

added to the reactor in solid form, by being absorbed on a carrier material. The carrier material usually contains 10 to 50 weight percent of the activator for this purpose. The additional activator compound is added to the reactor in such amounts as to provide, in the reactor, with the amounts of activator compound and titanium compound fed with the partially activated precursor composition, from ≧10 to ≦400 total mols of activator compound per mol of titanium compound in said precursor composition, preferably from 15 to 60 total mols of activator compound per mol of titanium compound in said precursor composition. The additional amounts of activator compound added to the reactor react with, and complete the activation of, the precursor composition in the reactor.

In the continuous gas phase fluid bed process disclosed below, discrete portions of the partially activated precursor composition are continuously fed to the reactor, with discrete portions of any additional activator compound needed to complete the activation of the partially activated precursor composition, during the continuing polymerization process in order to replace active catalyst sites that are expended during the course of the reaction.

The drawing shows a gas phase fluid bed reactor system in which the catalyst system of the present invention may be employed.

The polymerization reaction is conducted by contacting a stream of ethylene, in the fluid bed process described below, and substantially in the absence of catalyst poisons such as moisture, oxygen, CO, $CO_2$, and acetylene with a catalytically effective amount of the activated precursor composition (the catalyst) at a temperature and at a pressure sufficient to initiate the polymerization reaction.

A fluidized bed reaction system which can be used in the practice of the process of the present invention is illustrated in Figure 1. With reference thereto, the reactor 10 consists of a reaction zone 12 and a velocity reduction zone 14.

The reaction zone 12 comprises a bed of growing polymer particles, formed polymer particles and a minor amount of catalyst particles fluidized by the continuous flow of polymerizable and modifying gaseous components in the form of make-up feed and recycle gas through the reaction zone. To maintain a viable fluidized bed, the mass gas flow rate through the bed must be above the minimum flow required for fluidization, and preferably from 1.5 to 10 times $G_{mf}$ and more preferably from 3 to 6 times $G_{mf}$. $G_{mf}$ is used in the accepted form as the abbreviation for the minimum mass gas flow required to achieve fluidization, C.Y. Wen and Y.H. Yu, "Mechanics of Fluidization", Chemical Engineering Progress Symposium Series, Vol. 62, p. 100-111 ( 1966).

It is essential that the bed always contains particles to prevent the formation of localized "hot spots" and to entrap and distribute the particulate catalyst throughout the reaction zone. On start up, the reaction zone is usually charged with a base of particulate polymer particles before gas flow is initiated. Such particles may be identical in nature to the polymer to be formed or different therefrom. When different, they are withdrawn with the desired formed polymer particles as the first product. Eventually, a fluidized bed of the desired polymer particles supplants the start-up bed.

The partially activated precursor compound used in the fluidized bed is preferably stored for service in a reservoir 32 under a blanket of a gas which is inert to the stored material, such as nitrogen or argon.

Fluidization is achieved by a high rate of gas recycle to and through the bed, typically in the order of 50 times the rate of feed of make-up gas. The fluidized bed has the general appearance of a dense mass of viable particles in possible free-vortex flow as created by the percolation of gas through the bed. The pressure drop through the bed is equal to or slightly greater than the mass of the bed divided by the cross sectional area. It is thus dependent on the geometry of the reactor.

Make-up gas is fed to the bed at a rate equal to the rate at which particulate polymer product is withdrawn. The composition of the make-up gas is determined by a gas analyzer 16 positioned above the bed. The gas analyzer determines the composition of the gas being recycled and the composition of the make-up gas is adjusted accordingly to maintain an essentially steady state gaseous composition within the reaction zone.

To insure complete fluidization, the recycle gas and where desired, part of the make-up gas are returned to the reactor at point 18 below the bed. There exists a gas distribution plate 20 above the point of return to aid fluidizing the bed.

The portion of the gas stream which does not react in the bed constitutes the recycle gas which is removed from the polymerization zone, preferably by passing it into a velocity reduction zone 14 above the bed where entrained particles are given an opportunity to drop back into the bed. Particle return may be aided by a cyclone 22 which may be part of the velocity reduction zone or exterior thereto. Where desired, the recycle gas may then be passed through a filter 24 designed to remove small particles at high gas flow rates to prevent dust from contacting heat transfer surfaces and compressor blades.

The recycle gas is compressed in a compressor 25 and then passed through a heat exchanger 26 wherein it is stripped of heat of reaction before it is returned to the bed. By constantly removing heat of reaction, no noticeable temperature gradient appears to exist within the upper portion of the bed. A temperature gradient

will exist in the bottom of the bed in a layer of 15 to 30 cm (6 to 12 inches), between the temperature of the inlet gas and the temperature of the remainder of the bed. Thus, it has been observed that the bed acts to almost immediately adjust the temperature of the recycle gas above this bottom layer of the bed zone to make it conform to the temperature of the remainder of the bed, thereby maintaining itself at an essentially constant temperature under steady state conditions. The recycle is then returned to the reactor at its base 18 and to the fluidized bed through distribution plate 20. The compressor 25 can also be placed upstream of the heat exchanger 26.

The distribution plate 20 plays an important role in the operation of the reactor. The fluidized bed contains growing and formed particulate polymer particles as well as catalyst particles. As the polymer particles are hot and possibly active, they must be prevented from settling, for if a quiescent mass is allowed to exist, any active catalyst contained therein may continue to react and cause fusion. Diffusing recycle gas through the bed at a rate sufficient to maintain fluidization at the base of the bed is, therefore, important. The distribution plate 20 serves this purpose and may be a screen, slotted plate, perforated plate, a plate of the bubble cap type and the like. The elements of the plate may all be stationary, or the plate may be of the mobile type disclosed in US-A-2,298,792. Whatever its design, it must diffuse the recycle gas through the particles at the base of the bed to keep them in a fluidized condition, and also serve to support a quiescent bed of resin particles when the reactor is not in operation. The mobile elements of the plate may be used to dislodge any polymer particles entrapped in or on the plate.

Hydrogen may be used as a chain transfer agent in the polymerization reaction of the present invention. The ratio of hydrogen/ethylene employed will vary between 0 to 2.0 moles of hydrogen per mole of the ethylene in the gas stream.

Compounds of the structure $Zn(R_a)(R_b)$, wherein $R_a$ and $R_b$ are the same or different $C_1$ to $C_{14}$ aliphatic or aromatic hydrocarbon radicals, may be used in conjunction with hydrogen, with the catalysts of the present invention as molecular weight control or chain transfer agents, that is, to increase the melt index values of the homopolymers that are produced. From 0 to 50, and preferably from 20 to 30, mols of the Zn compound would be used in the gas stream in the reactor per mol of titanium compound in the reactor. The zinc compound would be introduced into the reactor, preferably in the form of a dilute solution (2 to 30 weight percent) in hydrocarbon solvent or absorbed on a solid carrier material, such a silica, of the types described above, in amounts of from 10 to 50 weight percent. These compositions tend to be pyrophoric. The zinc compound may be added alone, or with any additional portions of the activator compound that are to be added to the reactor from a feeder, not shown, which would feed the compound to the hottest portion of the gas recycle system, such as adjacent to feeder 27 disclosed herein.

Any gas inert to the catalyst and reactants can also be present in the gas stream. The activator compound is preferably added to the reaction system at the hottest portion of the recycle gas stream. Addition into the recycle line downstream from the heat exchanger is thus preferred, as from dispenser 27 through line 27A.

It is essential to operate the fluid bed reactor at a temperature below the sintering temperature of the polymer particles. To insure that sintering will not occur, operating temperatures below the sintering temperature are desired. For the production of ethylene homopolymers in the process of the present invention an operating temperature of from 30 to 115°C is preferred, and a temperature of from 90 to 105°C is preferably used to prepare products having a density of from 0.961 to 0.968 g/cm$^3$.

The fluid bed reactor is operated at pressures of up to 69 bar (1000 psi), and is preferably operated at a pressure of from 10.3 to 24 bar (150 to 350 psi), with operation at the higher pressures in such ranges favoring heat transfer since an increase in pressure increases the unit volume heat capacity of the gas.

The partially activated precursor composition is injected into the bed at a rate equal to its consumption at a point 30 which is above the distribution plate 20. Injecting the precursor composition at a point above the distribution plate is an important feature of this invention. Since the catalysts used in the practice of the invention are highly active, injection of the precursor composition into the area below the distribution plate may cause polymerization to begin there and eventually cause plugging of the distribution plate. Injection into the viable bed instead, aids in distributing the catalyst throughout the bed and tends to preclude the formation of localized spots of high catalyst concentration which may result in the formation of "hot spots".

A gas which is inert to the catalyst, such as nitrogen or argon is used to carry the partially activated precursor composition, and any additional activator compound that is needed, into the bed.

The production rate is controlled by the rate of catalyst injection. The production rate may be increased by simply increasing the rate of catalyst injection and decreased by reducing the rate of catalyst injection.

Since any change in the rate of catalyst injection will change the rate of generation of the heat of reaction, the temperature of the recycle gas is adjusted upwards or downwards to accommodate the change in rate of heat generation. This insures the maintenance of an essentially constant temperature in the bed. Complete instrumentation of both the fluidized bed and the recycle gas cooling system, is, of course, necessary to detect

any temperature change in the bed so as to enable the operator to make a suitable adjustment in the temperature of the recycle gas.

Under a given set of operating conditions, the fluidized bed is maintained at essentially a constant height by withdrawing a portion of the bed as product at a rate equal to the rate of formation of the particulate polymer product. Since the rate of heat generation is directly related to product formation, a measurement of the temperature rise of the gas across the reactor (the difference between inlet gas temperature and exit gas temperature) is determinative of the rate of particulate polymer formation at a constant gas velocity.

The particulate polymer product is preferably continuously withdrawn at a point 34 at or close to the distribution plate 20, and in suspension with a portion of the gas stream which is vented before the particles settle to preclude further polymerization and sintering when the particles reach their ultimate collection zone. The suspending gas may also be used, as mentioned above, to drive the product of one reactor to another reactor.

The particulate polymer product is conveniently and preferably withdrawn through the sequential operation of a pair of timed valves 36 and 38 defining a segregation zone 40. While valve 38 is closed, valve 36 is opened to emit a plug of gas and product to the zone 40 between it and valve 36 which is then closed. Valve 38 is then opened to deliver the product to an external recovery zone. Valve 38 is then closed to await the next product recovery operation.

Finally, the fluidized bed reactor is equipped with an adequate venting system to allow venting the bed during start up and shut down. The reactor does not require the use of stirring means and/or wall scraping means.

The highly active catalyst system of this invention appears to yield a fluid bed product having an average particle size between 0. 125 to 1.5 mm (0.005 to 0.06 inches) and preferably 0.5 to 1 mm (0.02 to 0.04 inches) wherein catalyst residues is unusually low.

The feed stream of gaseous monomer, with or without inert gaseous diluents, is fed into the reactor at a space time yield of 32 to 160 kg/h/m$^3$ (2 to 10 pounds/hour/cubic foot) of bed volume.

The polymer directly recovered from the polymerization reactor is in granular form ("virgin" polymer).

The following Examples are designed to illustrate the process of the present invention and are not intended as a limitation upon the scope thereof.

The properties of the polymers produced in the Examples were determined by the following test methods:

Density

ASTM D-1506-A plaque is made and conditioned for one hour at 120°C to approach equilibrium crystallinity and is then quickly cooled to room temperature. Measurement for density is then made in a density gradient column.

Melt Index (MI)

ASTM D-1238-Condition E-Measured at 190°C-reported as g/10 min.

Flow Rate (HLMI)

ASTM D-1238-Condition F-Measured at 10 times the weight used in the melt index test above.

$$\text{Melt Flow Ratio (MFR)}=\frac{\text{Flow Rate}}{\text{Melt Index}}$$

Productivity

A sample of the resin product is ashed, and the weight % of ash is determined; since the ash is essentially composed of the catalyst, the productivity is thus the kg of polymer produced per kg of total catalyst consumed. The amount of Ti, Mg and Cl in the ash are determined by elemental analysis;

Cyclohexane Extractables

A sample of resin is extracted with boiling (at atmospheric pressure) cyclohexane for ≧18 hours.

Bulk Density

The resin is poured via 9,5 mm (3/8") diameter funnel into a 100 ml graduated cylinder to 100 ml line without shaking the cylinder, and weighed by difference.

Molecular Weight Distribution ($\overline{Mw}/\overline{Mn}$)

Gel Permeation Chromatography Styrogel Packing: (Pore Size Sequence is $10^6$, $10^5$, $10^4$, $10^3$, 6 nm) Solvent is Orthodichloro benzene at 135°C. Detection: Infra red at 3.45 μm.

Unsaturation

Infrared Spectrophotometer (Perkin Elmer Model 21). Pressings made from the resin which are 0.63 mm (25 mils) in thickness are used as test specimens. Absorbance is measured at 10.35 μm for transvinylene unsaturation, 11.0 μm for terminal vinyl unsaturation and 11.25 μm for pendant vinylidene unsaturation. The absorbance per mil or thickness of the pressing is directly proportional to the product of unsaturation concentration and absorptivity. Absorptivities are taken from the literature values of R. J. de Kock, et al, J. Polymer Science, Part B, *2*, 339 (1964).

Preparation of catalyst

I. Preparation of precursor composition

In a 5 liter flask equipped with a mechanical stirrer, 16.0 g (0.168 Mol) of anhydrous $MgCl_2$ was mixed with 850 ml of pure tetrahydrofuran under nitrogen. The mixture was stirred at room temperature (~25°C) while 13.05 g (0.069 Mol) of $TiCl_4$ was added dropwise. After complete addition, the contents of the flask were heated to reflux for about 1/2 to 1 hour to dissolve the solids. The system was cooled to room temperature and 3 liters of pure n-hexane was slowly added over a period of 1/4 hour. A yellow solid precipitated. The supernatant was decanted and the solids were washed three times with one liter of n-hexane. The solids were filtered and dried in a rotating evaporating flask at 40-60°C to give 55 g of solid precursor composition.

The precursor composition may be analyzed at this point for Mg and Ti content since some of the Mg and/or Ti compound may have been lost during the isolation of the precursor composition. The empirical formulas used herein in reporting these precursor compositions are derived by assuming that the Mg and the Ti still exist in the form of the compounds in which they were first added to the electron donor compound and that all other residual weight in the precursor composition is due to the electron donor compound.

Analysis of the solid showed the following:

Mg:6.1%; Ti:4.9%; which corresponds to $TiMg_{2.45}Cl_{8.9}(THF)_{7.0}$. THF means tetrahydrofuran.

II. Activation procedures

The activation is conducted in such a way that the precursor composition is only partially activated prior to the introduction thereof into the polymerization reactor, and then the remainder of the activation process is completed within such reactor.

The desired weight of dry inert carrier material is charged to a mixing vessel or tank. For the examples described herein, the amount of inert carrier is 500 grams for silica and 1000 grams for a polyethylene carrier. The inert carrier material is then admixed with sufficient amounts of anhydrous, aliphatic hydrocarbon diluent, such as isopentane, to provide a slurry system. This usually requires 4 to 7 ml of diluent per gram of inert carrier. The desired weight of the precursor composition is then charged to the mixing vessel and thoroughly admixed with the slurry composition. The amount of precursor composition used in this procedure for making the catalysts in these examples is 80 to 135 grams, with such precursor composition having an elemental titanium content of 1±0.1 millimole of Ti per gram of precursor composition.

The desired amount of activator compound needed to partially activate the precursor composition is added to the contents of the mixing vessel so as to partially activate the precursor composition. The amount of activator compound used in this regard provides an Al/Ti ratio in the partially activated precursor composition of >0 to <10:1, and preferably of 3 to 6:1. The activator compound is added to the mixing tank in the form of a solution which contains 20 weight percent of the activator compound (triethyl aluminum in these examples) in an inert aliphatic hydrocarbon solvent (hexane in these examples). The activation is accomplished by thoroughly mixing and contacting the activator compound with the precursor composition. All of the operations described above are conducted at room temperature, and at atmospheric pressure, in an inert atmosphere.

The resulting slurry is then dried under a purge of dry inert gas, such as nitrogen or argon, at atmospheric pressure at a temperature of ≦60°C to remove the hydrocarbon diluent. This process usually requires 3 to 5 hours. The resulting product is in the form of a dry free-flowing particulate material wherein the partially activated precursor composition is uniformly blended with the inert carrier. The dried product is stored under an inert gas.

In order to complete the activation of the partially activated precursor composition, additional activator compound is fed to the polymerization reactor absorbed on an inert carrier material, such as silica or polyethylene, or, most preferably, as a dilute solution in a hydrocarbon solvent such as isopentane.

When the activator compound is to be absorbed on a silica carrier, the two materials are mixed in a vessel containing about 4 ml of isopentane per gram of carrier material. The resulting slurry is then dried for about 3 to 5 hours under a purge of nitrogen at atmospheric pressure at a temperature of 65±10°C to remove the hydrocarbon diluent.

When the activator compound is to be injected into the polymerization reaction system as a dilute solution concentrations of 5 to 10% by weight are preferred.

Regardless of the method used to introduce the activator compound into the polymerization reactor for the purposes of completing the activation of the precursor composition, it is added at a rate such as to maintain the Al/Ti ratio in the polymerization reactor at a level of ≧10 to 400:1, and preferably of ≧10 to 100:1.

Prior to being used herein, the silicas are dried at ≧200°C for ≧4 hours.

## Examples 1-3

Ethylene was homopolymerized in each of this series of 3 examples with catalyst formed and activated as described above. The silica diluted precursor composition contained 18.4±1% by weight of precursor composition. In each case the partially activated precursor composition had an Al/Ti mol ratio of 4.52±0.03. The completion of the activation of the precursor composition in the polymerization reactor was accomplished with triethyl aluminum absorbed on silica (50/50 weight percent of the two materials) so as to provide the completely activated catalyst in the reactor with an Al/Ti mol ratio of 30.

Each of the polymerization reactions was continuously conducted for >1 hour after equilibrium was reached and under a pressure of 22 bar (300 psig) and a gas velocity of 3 to 4 times $G_{mf}$ in a fluid bed reactor system at a space time yield of 48 to 96 kg/h/$m^3$ (3 to 6 lbs/hr/$ft^3$) of bed space. The reaction system was as described above. It has a lower section 3 m (10 feet) high and 34.3 cm (13 1/2 inches) in (inner) diameter, and an upper section which was 4.8 m (16 feet) high and 59.7 cm (23 1/2 inches) in (inner) diameter.

Table I below lists the $H_2$/ethylene mol ratio and % by volume of ethylene in the reactor and polymerization temperature used in each of Examples 1-3, as well as various properties of the granular virgin resins made in such examples.

TABLE I
Reaction conditions and resin properties for examples 1 to 3

| Example | 1 | 2 | 3 |
|---|---|---|---|
| **Operating Conditions** | | | |
| $H_2/C_2$ ratio | 0.201 | 0.411 | 0.418 |
| Temperature, °C | 90 | 110 | 104 |
| % by volume of $C_2$ in reactor | 74.8 | 53.8 | 58.6 |
| Catalyst Productivity (kg resin/kg Ti) | 210,000 | 74,000 | 142,000 |
| **Resin Properties** | | | |
| density, g/cm$^3$ | 0.9626 | 0.9708 | 0.9701 |
| melt index, g/10 min | 0.63 | 14.6 | 7.38 |
| melt flow ratio | 29.2 | 27.0 | 27.9 |
| cyclohexane extractables, % | 0.16 | 0.74 | 0.43 |
| ash, weight % | 0.054 | 0.196 | 0.068 |
| Ti content, ppm | 4.8 | 13.5 | 7.0 |
| Cl content, ppm (estimated) | 32 | 89 | 46 |
| Cl content, ppm (by analysis) | — | 53—62 | 39—45 |
| bulk density, g/cm$^3$ (lbs/ft$^3$) | 0.293 (18.1) | 0.424 (26.2) | 0.405 (25.0) |
| average particle size, mm (inches) | 0.935 (0.0368) | 0.488 (0.0192) | 0.655 (0.0258) |
| Fines, weight % <0.17 mm (<100 mesh) | 7.9 | 20.0 | 5.0 |

Examples 4 to 16

Ethylene was homopolymerized in each of this series of 13 examples with catalyst formed and activated as described above. In each case the partially activated precursor composition had an Al/Ti mol ratio of 4.71±0.01. The completion of the activation of the precursor composition in the polymerization reactor was accomplished with triethyl aluminum as a 2.6 or 5 weight % solution in isopentane so as to provide the completely activated catalyst in the reactor with an Al/Ti mol ratio of about 13 to 62.

Each of the reactions was conducted as in Examples 1 to 3. Table II below lists, for Example 4 to 16, the operating conditions also reported in Table I, as well as the Al/Ti mol ratio maintained in the reactor and the weight percent of precursor composition in the silica diluted silica/precursor composition mixture. Table III below lists, for Examples 4 to 16, various properties of the polymers made in such examples.

Zinc diethyl was added to the reactor as a 2.6 weight % solution in isopentane, to maintain a Zn/Ti ratio of 30 in the reactor in each of Examples 5, 6 and 9. In such examples the activator compound was also added to the reactor as a 2.6 weight % solution in isopentane.

TABLE II
Reaction conditions for examples 4 to 16

| Example | Wt, % precursor | Al/Ti ratio in reactor | Temp. °C | Vol % $C_2$ in reactor | $H_2/C_2$ mol ratio | Catalyst productivity (kg resin/kg Ti) |
|---|---|---|---|---|---|---|
| 4 | 17.7 | 30 | 100 | 62.9 | 0.421 | 333,000 |
| 5 | 17.7 | 30 | 110 | 71.9 | 0.263 | 333,000 |
| 6 | 18.2 | 24.1 | 100 | 69.3 | 0.198 | 200,000 |
| 7 | 18.0 | 12.7 | 110 | 63.0 | 0.226 | 143,000 |
| 8 | 18.8 | 22.1 | 99.9 | 57.2 | 0.405 | 125,000 |
| 9 | 17.0 | 51.0 | 104 | 55.5 | 0.400 | 105,000 |
| 10 | 17.0 | 48.0 | 104 | 54.9 | 0.390 | 91,000 |
| 11 | 17.4 | 62.3 | 104 | 52.5 | 0.393 | 80,000 |
| 12 | 17.2 | 43.7 | 104 | 55.9 | 0.400 | 100,000 |
| 13 | 17.2 | 23.4 | 104 | 54.7 | 0.403 | 83,000 |
| 14 | 17.6 | 38.1 | 104 | 58.6 | 0.399 | 77,000 |
| 15 | 17.5 | 46.9 | 104 | 55.2 | 0.390 | 125,000 |
| 16 | 17.5 | 49.9 | 104 | 57.2 | 0.406 | 105,000 |

TABLE III
Properties of polymers made in examples 4 to 16

| Example | density g/cm³ | MI (g/10 min) | MFR | ash wt % | Ti ppm | bulk density g/cm³ | bulk density (lbs/ft³) | average particle size mm | average particle size (inches) |
|---|---|---|---|---|---|---|---|---|---|
| 4 | 0.9693 | 9.0 | 28.4 | 0.073 | 3.0 | 0.379 | (23.7) | 0.792 | (0.0312) |
| 5 | 0.9691 | 7.57 | 28.0 | 0.054 | 3.0 | 0.370 | (23.1) | 0.777 | (0.0306) |
| 6 | 0.9656 | 1.74 | 26.2 | 0.019 | 5.0 | 0.339 | (21.2) | 1.016 | (0.0400) |
| 7 | 0.9635 | 3.08 | 25.1 | 0.074 | 7.0 | 0.376 | (23.5) | 0.828 | (0.0326) |
| 8 | 0.9701 | 9.93 | 27.4 | 0.106 | 8.0 | 0.339 | (21.2) | 0.795 | (0.0313) |
| 9 | 0.9706 | 6.47 | 27.8 | 0.100 | 9.5 | 0.379 | (23.7) | 0.544 | (0.0214) |
| 10 | 0.9701 | 7.33 | 25.6 | 0.090 | 11.0 | 0.389 | (24.3) | 0.533 | (0.0210) |
| 11 | 0.9706 | 8.12 | 27.7 | 0.110 | 12.5 | 0.349 | (21.8) | 0.574 | (0.0226) |
| 12 | 0.9699 | 8.37 | 26.9 | 0.080 | 10.0 | 0.349 | (21.8) | 0.612 | (0.0241) |
| 13 | 0.9708 | 7.28 | 27.7 | 0.125 | 12.0 | 0.358 | (22.4) | 0.658 | (0.0259) |
| 14 | 0.9709 | 9.33 | 27.7 | 0.100 | 13.0 | 0.379 | (23.7) | 0.617 | (0.0243) |
| 15 | 0.9707 | 7.33 | 27.4 | 0.117 | 8 | 0.269 | (16.8) | 0.455 | (0.0179) |
| 16 | 0.9716 | 10.03 | 28.4 | 0.105 | 9.5 | 0.370 | (23.1) | 0.576 | (0.0227) |

## Claims

1. A process for preparing a catalyst composition by forming a precursor composition from a magnesium compound, titanium compound and electron donor compound, and then activating the precursor composition with an organoaluminum compound to form the catalyst, characterized by

(A) forming a precursor composition of the formula

$$Mg_mTi(OR)_nX_pED_q$$

wherein R is a $C_1$ to $C_{14}$ aliphatic or aromatic hydrocarbon radical, or COR′ wherein R′ is a $C_1$ to $C_{14}$ aliphatic or aromatic hydrocarbon radical,

X is selected from the group consisting of Cl, Br, I or mixtures thereof,

ED is an electron donor compound,

m is $\geqq 1.5$ to $\leqq 56$

n is 0 or 1

p is $\geqq 6$ to $\leqq 116$ and

q is $\geqq 2$ to $\leqq 85$

by dissolving at least one magnesium compound and at least one titanium compound in at least one electron donor compound so as to thereby form a solution of said precursor composition in said electron donor compound, and recovering said precursor composition from said solution,

said magnesium compound having the structure $MgX_2$,

said titanium compound having the structure $Ti(OR)_aX_b$ wherein a is 0 or 1, b is 2 to 4 inclusive and a+b=3 or 4,

said electron donor compound being a liquid organic compound in which said magnesium compound and said titanium compound are soluble and which is selected from the group consisting of alkyl esters of aliphatic and aromatic carboxylic acids, aliphatic ethers, cyclic ethers and aliphatic ketones, and

said magnesium compound, said titanium compound and said electron donor compound being employed in such amounts as to satisfy the values of m, n, p and q,

(B) mechanically mixing or blending the recovered precursor composition with a solid dry inert particulate carrier material in a ratio of 0.033 to 1 part of precursor composition per part by weight of carrier material, said carrier material having an average particle size of from 10 to 250 µm,

(C) treating the precursor composition outside the polymerization reactor in a hydrocarbon slurry with enough activator compound so as to provide a partially activated precursor composition with an activator compound: Ti molar ratio of >0 to 10:1, said activator compound having the structure

$$Al(R'')_cX'_dH_e$$

wherein X′ is Cl or OR‴, R″ and R‴ are the same or different and are $C_1$ to $C_{14}$ saturated hydrocarbon radicals, d is 0 to 1.5, e is 1 or 0 and c+d+e=3, and drying the mixture to obtain a free-flowing solid particulate material, and

(D) feeding the precursor composition into the polymerization reactor wherein it is further activated by adding additional activator compound to the reactor in such amounts as to provide a total Al:Ti molar ratio of 10 to 400:1 in said precursor composition.

2. A continuous process for producing ethylene homopolymer with a Ti containing catalyst at a productivity of $\geqq$50.000 kg of polymer per kg of Ti under a pressure of <69 bar (<1000 psi) in the gas phase, said polymer being produced in granular form and having a density of $\geqq$0.958 to $\leqq$0.972 g/cm³ and a melt flow ratio of $\geqq$22 to $\leqq$32, which comprises homopolymerizing ethylene at a temperature of 30 to 115°C by contacting the monomer charge with, in the presence of 0 to 2.0 mols of hydrogen per mol of ethylene in a gas phase fluid bed reaction zone, particles of the catalyst of claim 1.

## Patentansprüche

1. Verfahren zur Herstellung einer Katalysatorzusammensetzung durch Bildung einer Vorläuferzusammensetzung aus einer Magnesiumverbindung, Titanverbindung und Elektronendonorverbindung und anschließende Aktivierung der Vorläuferzusammensetzung mit einer Organoaluminiumverbindung zur Bildung des Katalysators, dadurch gekennzeichnet, daß man

(A) eine Vorläuferzusammensetzung der Formel

$$Mg_mTi(OR)_nX_pED_q$$

in welcher R ein $C_1$ bis $C_{14}$ aliphatischer oder aromatischer Kohlenwasserstoffrest oder COR′ ist, worin R′ ein $C_1$ bis $C_{14}$ aliphatischer oder aromatischer Kohlenwasserstoffrest ist,

X aus der aus Cl, Br, J oder Mischungen derselben bestehenden Gruppe ausgewählt ist,

ED eine Elektronendonorverbindung ist,
m $\geqq$1,5 bis $\leqq$56 ist,
n 0 oder 1 ist
p $\geqq$6 bis $\leqq$116 ist und
p $\geqq$2 bis $\leqq$85 ist,

bildet, indem man mindestens eine Magnesiumverbindung und mindestens eine Titanverbindung in mindestens einer Elektronendonorverbindung zur Bildung einer Lösung des Vorläuferzusammensetzung in der Elektronendonorverbindung löst und die Verläuferzusammensetzung aus der Lösung gewinnt,

wobei die Magnesiumverbindung die Struktur $MgX_2$ hat,

die Titanverbindung die Struktur $Ti(OR)_aX_b$ hat, worin a 0 oder 1 ist, b 2 bis 4 einschließlich ist und a+b=3 oder 4 ist,

die Elektronendonorverbindung eine flüssige organische Verbindung ist, in welcher die Magnesiumverbindung und die Titanverbindung löslich sind und die aus der aus Alkylestern aliphatischer und aromatischer Carbonsäuren, aliphatischen Ethern, cyclischen Ethern und aliphatischen Ketonen bestehenden Gruppe ausgewählt ist, und

die Magnesiumverbindung, die Titanverbindung und die Elektronendonorverbindung in solchen Mengen verwendet werden, daß sie die Werte von m, n, p und q ergeben;

(B) die gewonnene Vorläuferzusammensetzung mit einem festen trockenen inerten fein zerteilten Trägermaterial in einem Verhältnis von 0,033 bis 1 Teil Vorläuferzusammensetzung pro Gew.-Teil Trägermaterial mechanisch mischt oder vermischt, wobei das Trägermaterial eine durchschnittliche Teilchengröße von 10 bis 250 µm hat,

(C) die Vorläuferzusammensetzung außerhalb des Polymerisationsreaktors in einer Kohlenwasserstoffaufschlämmung mit ausreichend Aktivatorverbindung behandelt, um eine teilweise aktivierte Vorläuferzusammensetzung mit einem molaren Verhältnis von Aktivatorverbindung: Ti von 1 bis 10:1 zu ergeben, wobei die Aktivatorverbindung die Struktur

$$Al(R'')_cX'_dH_e$$

hat, worin X' Cl oder OR''' ist, R'' und R''' gleich oder verschieden und $C_1$ bis $C_{14}$ gesättigte Kohlenwasserstoffreste sind, d 0 bis 1,5 ist, e 1 oder 0 ist und c+d+e=3 ist, und die Mischung zur Bildung eines frei fließenden festen fein zerteilten Materials trocknet, und

(D) die Vorläuferzusammensetzung in einen Polymerisationsreaktor einführt, in welchem sie durch Zugabe von weiterer Aktivatorverbindung in den Reaktor in solchen Mengen, daß sich ein molares Gesamtverhältnis von Al:Ti von 10 bis 400:1 in der vorläuferzusammensetzung ergibt, weiter aktiviert.

2. Kontinuierliches Verfahren zur Herstellung eines Ethylenhomopolymerisates mit einem Ti-haltigen Katalysator bei einer Produktivität von $\geqq$50 000 kg Polymerisat pro kg Ti unter einem Druck von <69 bar (<1000 psi) in der Gasphase, wobei das Polymerisat in granularer Form und mit einer Dichte von $\geqq$0,958 bis $\leqq$0,972 g/cm³ und einem Schmelzflußverhältnis von $\geqq$22 bis $\leqq$32 produziert wird, dadurch gekennzeichnet, daß Ethylen bei einer Temperatur von 30 bis 115°C homopolymerisiert wird, indem man die monomere Beschickung in Anwesenheit von 0 bis 2,0 Mol Wasserstoff pro Mol Ethylen in der Gasphase in einer Wirbelbettreaktionszone mit Teilchen des Katalysators von Anspruch 1 in Berührung bringt.

## Revendications

1. Procédé de préparation d'une composition de catalyseur par formation d'une composition de précurseur à partir d'un composé de magnésium, d'un composé de titane et d'un composé donneur d'électrons puis activation de la composition de précurseur avec un composé organique d'aluminium pour former le catalyseur, caractérisé par

(A) la formation d'une composition de précurseur de formule

$$Mg_mTi(OR)_nX_pED_q$$

dans laquelle R est un radical d'hydrocarbure aliphatique ou aromatique en $C_1$ à $C_{14}$ ou un groupe COR' dans lequel R' est un radical d'hydrocarbure aliphatique ou aromatique,

X est choisi dans le groupe comprenant Cl, Br, I ou leurs mélanges,
ED est un composé donneur d'électrons,
m va d'une valeur supérieure ou égale à 1,5 à une valeur inférieure ou égale à 56
n a la valeur 0 ou 1
p va d'une valeur supérieure ou égale à 6 à une valeur inférieure ou égale à 116 et
q va d'une valeur supérieure ou égale à 2 à une valeur inférieure ou égale à 85 par dissolution d'au moins un composé de magnésium et d'au moins un composé de titane dans au moins un composé donneur d'élec-

trons de manière à former ainsi une solution de ladite composition de précurseur dans ledit composé donneur d'électrons et isolement de ladite composition de précurseur de ladite solution;

ledit composé de magnésium répondant à la formule $MgX_2$,

ledit composé de titane répondant à la formule $Ti(OR)_aX_b$ dans laquelle a a la valeur 0 ou 1, b a une valeur de 2 à 4 inclus et la somme a+b a la valeur 3 ou 4,

le composé donneur d'électrons étant un composé organique liquide dans lequel ledit composé de magnésium et ledit composé de titane sont solubles et qui est choisi dans le groupe comprenant des esters alkyliques d'acides carboxyliques aliphatiques et aromatiques, des éthers aliphatiques, des éthers cycliques et des cétones aliphatiques,

ledit composé de magnésium, ledit composé de titane et ledit composé donneur d'électrons étant utilisés en quantités aptes à satisfaire les valeurs de m, n, p et q,

(B) agitation ou mélange mécanique de la composition de précurseur recueillie avec un support solide sec inerte en particules dans un rapport de 0,033 à 1 partie de composition de précurseur par partie en poids de matière de support, ladite matière de support ayant un diamètre moyen de particules de 10 à 250 μm,

(C) traitement de la composition de précurseur à l'extérieur du réacteur de polymérisation en suspension dans un hydrocarbure avec une quantité suffisante de composé activateur pour obtenir une composition de précurseur partiellement activée avec un rapport molaire du composé activateur à Ti allant d'une valeur supérieure à 0 à une valeur inférieure à 10:1, ledit composé activateur répondant à la formule

$$Al(R'')_cX'_dH_e$$

dans laquelle X' représente Cl ou un groupe OR''', R'' et R''' étant égaux ou différents et représentant des radicaux hydrocarbonés saturés en $C_1$ à $C_{14}$, d a une valeur de 0 à 1,5, e a la valeur 1 ou 0 et la somme c+d+e est égale à 3, et séchage du mélange pour obtenir une matière en particules solides s'écoulant librement, et

(D) introduction de la composition de précurseur dans le réacteur de polymérisation dans lequel elle est encore activée par addition d'un supplément de composé activateur au réacteur en quantités choisies de manière qu'il y ait un rapport molaire Al:Ti total de 10 à 400:1 dans ladite composition de précurseur.

2. Procédé continu de production d'un homopolymère d'éthylène avec un catalyseur contenant du titane à une productivité supérieure ou égale à 50 000 kg de polymère par kg de Ti sous une pression inférieure à 69 bars (<1000 $lb/in^2$) dans la phase gazeuse, ledit polymère étant produit sous une forme granulaire et ayant une masse volumique allant d'une valeur supérieure ou égale à 0,958 à une valeur inférieure ou égale à 0,972 $g/cm^3$ et un rapport écoulement-fluidité allant d'une valeur supérieure ou égale à 22 à une valeur inférieure ou égale à 32, qui consiste à homopolymériser de l'éthylène à une température de 30 à 115°C par mise en contact de la charge monomérique avec des particules du catalyseur suivant la revendication 1, en présence de 0 à 2,0 moles d'hydrogène par mole d'éthylène dans une zone de réaction à lit fluide en phase gazeuse.

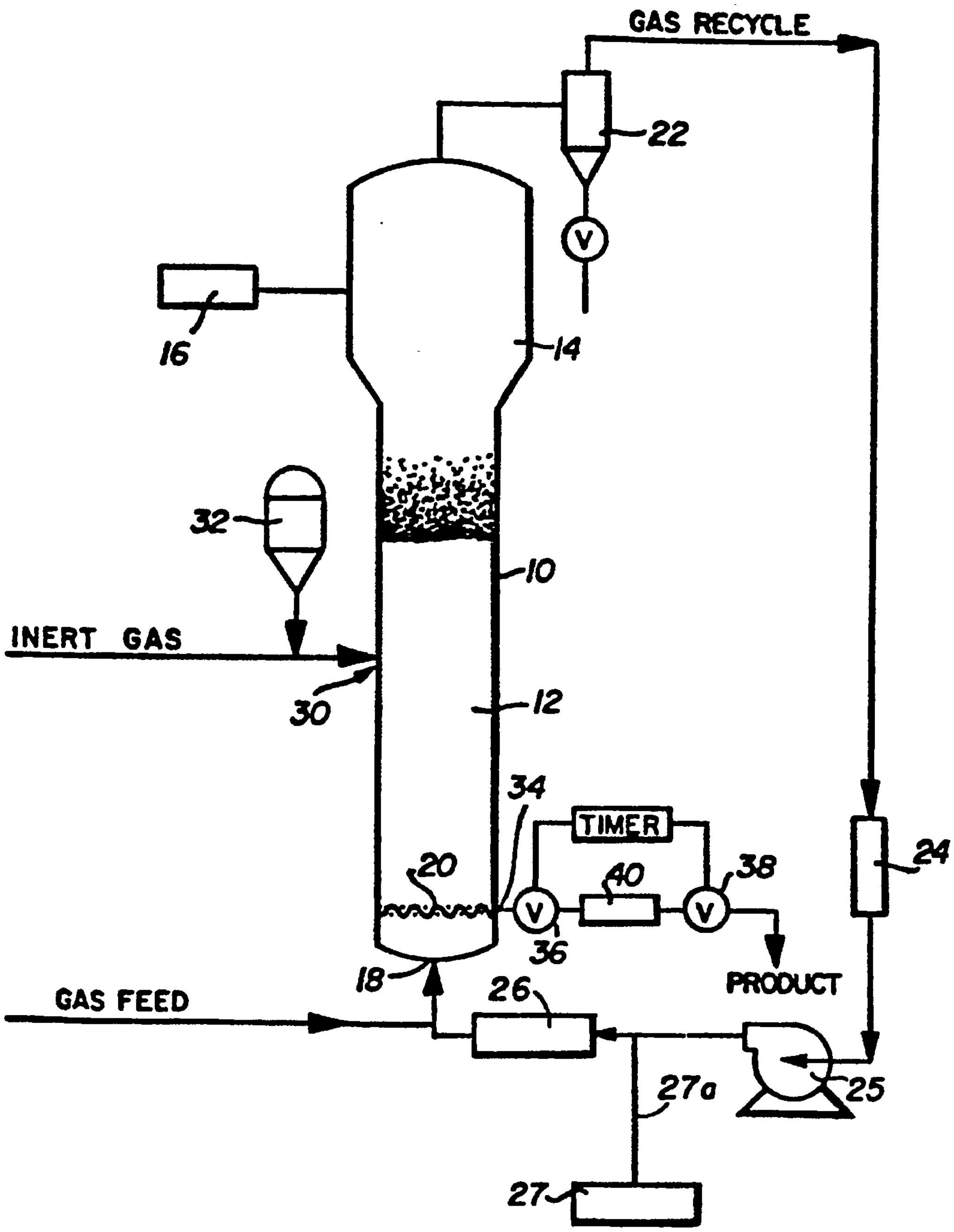
GAS RECYCLE
22
V
16
14
32
10
INERT GAS
30
12
34
TIMER
20
40
38
24
V
V
36
18
PRODUCT
26
GAS FEED
27a
25
27